(19) Europäisches Patentamt
European Patent Office
Office européen des brevets

(11) **EP 3 817 241 A1**

(12) **EUROPEAN PATENT APPLICATION**
published in accordance with Art. 153(4) EPC

(43) Date of publication:
**05.05.2021 Bulletin 2021/18**

(51) Int Cl.:
***H04B 7/0413*** *(2017.01)*  ***H04B 7/06*** *(2006.01)*

(21) Application number: **19840869.2**

(22) Date of filing: **25.07.2019**

(86) International application number:
**PCT/CN2019/097682**

(87) International publication number:
**WO 2020/020283 (30.01.2020 Gazette 2020/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.07.2018 CN 201810846998**

(71) Applicant: **Huawei Technologies Co., Ltd.
Longgang District
Shenzhen
Guangdong 518129 (CN)**

(72) Inventor: **ZHANG, Pengcheng
Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **SIGNAL PROCESSING METHOD AND APPARATUS**

(57) This application provides a signal processing method and apparatus. The method includes: A baseband processing unit performs processing on M signal components of a first signal based on a unitary matrix, to allocate one signal to a plurality of feed tunnels, and then performs processes such as modulation and power allocation. Then, an antenna unit performs, through a bridge circuit, processing based on an inverse transform relationship of the unitary matrix, to converge signals on the plurality of feed tunnels to a preset antenna, so that communication with a terminal device is implemented. The solution can implement power sharing among feed tunnels of a remote radio unit without adding a feed tunnel, and implement flexible power allocation among a plurality of antennas, so that costs can be reduced.

300

```
┌─────────────────────────────────────────────────────┐
│ Obtain a first signal, where the first signal includes │ ── S310
│ M signal components, and M is a positive integer       │
│ greater than or equal to 1                             │
└─────────────────────────────────────────────────────┘
                          ↓
┌─────────────────────────────────────────────────────┐
│ Perform first weighted processing on the first signal  │ ── S320
│ based on a first matrix, to determine N second signals, │
│ where N is an integer greater than or equal to 1, a    │
│ quantity of rows of the first matrix is M, and a        │
│ quantity of columns of the first matrix is N           │
└─────────────────────────────────────────────────────┘
                          ↓
┌─────────────────────────────────────────────────────┐
│ Perform second weighted processing on the N second     │ ── S330
│ signals based on a second matrix, to determine K third  │
│ signals, where the second matrix is a conjugate         │
│ transpose matrix of a matrix including K M-dimensional  │
│ vectors in a determinant of the first matrix, and K is  │
│ less than or equal to N                                 │
└─────────────────────────────────────────────────────┘
                          ↓
┌─────────────────────────────────────────────────────┐
│ Send the K third signals through a preset beam, where   │ ── S340
│ the preset beam is used to carry the third signals to be │
│ sent to at least one terminal device corresponding to   │
│ the beam                                                │
└─────────────────────────────────────────────────────┘
```

FIG. 3

## Description

This application claims priority to Chinese Patent Application No. 201810846998.5, filed with the Chinese Patent Office on July 27, 2018 and entitled "SIGNAL PROCESSING METHOD AND APPARATUS", which is incorporated herein by reference in its entirety.

## TECHNICAL FIELD

This application relates to the communications field, and more specifically, to a signal processing method and apparatus in a multiple-antenna system.

## BACKGROUND

A multiple-antenna technology such as a multiple-input multiple-output (multiple-input multiple-output, MIMO) technology or an adaptive antenna system (adaptive antenna system, AAS) is used to increase a network capacity. Vertical (latitudinal) distribution of service information tunnels is expanded mainly by increasing a quantity of tunnels, so that spectral efficiency is improved, and the network capacity is improved.

In a multiple-tunnel multiple-antenna system, a maximum power of each tunnel is fixed. A remote radio unit (remote radio unit, RRU) may allocate a power to each signal, to generate a plurality of powers, and the plurality of powers correspond to a plurality of beams. When a rated power is limited, the plurality of powers need to be separately allocated to the plurality of beams. However, a quantity of beams that can be used by a terminal device to receive the powers is limited, and not all the plurality of powers of the plurality of beams can be received by the terminal device. In the existing multiple-antenna system, although a signal can be fully beamformed, each radio frequency tunnel corresponds to one antenna array. Power sharing is difficult to be implemented among beams in different groups. In addition, too many tunnels definitely cause a cost increase.

## SUMMARY

This application provides a signal processing method and apparatus in a multiple-antenna system, to implement flexible power allocation among a plurality of antennas, so as to reduce costs.

According to a first aspect, a signal processing method is provided. The method includes: obtaining a first signal, where the first signal includes M signal components, and M is a positive integer greater than or equal to 1; performing first weighted processing on the first signal based on a first matrix, to determine N second signals, where N is an integer greater than or equal to 1, a quantity of rows of the first matrix is M, and a quantity of columns of the first matrix is N; performing second weighted processing on the N second signals based on a second matrix, to determine K third signals, where the second matrix is a conjugate transpose matrix of a matrix including K M-dimensional vectors in a determinant of the first matrix, and K is less than or equal to N; and sending the K third signals through a preset beam, where the preset beam is used to carry the third signals to be sent to at least one terminal device corresponding to the beam.

According to the signal processing method provided in this embodiment of this application, a baseband processing unit performs the first weighted processing based on the first matrix, to allocate the M signal components of the first signal to a plurality of feed tunnels, and performs processes such as modulation and power allocation. Then, an antenna unit performs the second weighted processing based on the conjugate transpose matrix of the first matrix. For example, the antenna unit performs, through a bridge circuit, the second weighted processing based on the conjugate transpose matrix of the first matrix, to converge signals on the plurality of feed tunnels to a preset antenna. In this way, a power can be allocated flexibly through an RRU. Compared with a fixed transmit/receive relationship in an existing antenna feeder technology that a feed tunnel of an RRU is directly connected to an antenna, this solution can implement power sharing among feed tunnels of the RRU without adding a feed tunnel, and implement flexible power allocation among a plurality of antennas, so that costs can be reduced.

With reference to the first aspect, in some implementations of the first aspect, the first matrix includes N pairwise orthogonal M-dimensional vectors.

With reference to the first aspect and the foregoing implementations, in some possible implementations, a value of K is equal to a value of M, and the K third signals are in a one-to-one correspondence with the M signal components.

Optionally, when K is equal to M, it may be understood that K=M=N. The BBU performs the first weighted processing based on the first matrix, to allocate one original signal to N tunnels. Correspondingly, then, the antenna unit may converge the signals on the N tunnels to one beam.

With reference to the first aspect and the foregoing implementations, in some possible implementations, the first matrix is a unitary matrix.

It should be understood that one terminal device may correspond to one or more beams. When one terminal device corresponds to one beam, the BBU performs the first weighted processing based on the first matrix, to allocate one original signal to the N tunnels, and then, the antenna unit may converge the signals on the N tunnels to the beam, and communication with the terminal device through the beam is performed.

With reference to the first aspect and the foregoing implementations, in some possible implementations, the first matrix is a matrix determined based on a discrete fourier transform, or a matrix determined based on a Kronecker product of m matrices $\begin{bmatrix} 1 & j \\ j & 1 \end{bmatrix}$ .

With reference to the first aspect and the foregoing implementations, in some possible implementations, a quantity of preset beams corresponds to N terminal devices.

Specifically, in a possible implementation, the first matrix processing circuit may include four bridge devices, where a 90° bridge device

$$\frac{\sqrt{2}}{2}\begin{bmatrix} 1 & j \\ j & 1 \end{bmatrix}$$

is a smallest composition unit of the circuit. The 90° bridge device is also referred to as an intra-band combiner, which can continuously sample a transmit power along a determined direction of a transmission line, and divide one input signal into two signals with an equal amplitude and a 90° phase difference. In this way, the bridge circuit performs the first weighted processing, to converge the M first signals to the N second signals.

It should be understood that the unitary matrix circuit has a plurality of forms. For example, the unitary matrix circuit may include one 90° bridge device, or may include a plurality of 90° bridge devices. This is not limited in this application.

With reference to the first aspect and the foregoing implementations, in some possible implementations, a mathematical form of the first matrix is any one of the following:

$$\begin{bmatrix} 1 & -j & -j & -1 \\ -1 & j & -j & -1 \\ -1 & -j & j & -1 \\ 1 & j & j & -1 \end{bmatrix}, \begin{bmatrix} 1 & j & j & -1 \\ j & 1 & -1 & j \\ j & -1 & 1 & j \\ -1 & j & j & 1 \end{bmatrix}, \text{or} \begin{bmatrix} 1 & 1 & 1 & 1 \\ 1 & j & -1 & -j \\ 1 & -1 & 1 & -1 \\ 1 & -j & -1 & j \end{bmatrix}.$$

According to a second aspect, a signal processing apparatus is provided. The apparatus includes: an obtaining unit, configured to obtain a first signal, where the first signal includes M signal components, and M is a positive integer greater than or equal to 1; a processing unit, configured to perform first weighted processing on the first signal based on a first matrix, to determine N second signals, where N is an integer greater than or equal to 1, a quantity of rows of the first matrix is M, and a quantity of columns of the first matrix is N, where the processing unit is further configured to perform second weighted processing on the N second signals based on a second matrix, to determine K third signals, where the second matrix is a conjugate transpose matrix of a matrix including K M-dimensional vectors in a determinant of the first matrix, and K is less than or equal to N; and a communications unit, configured to send the K third signals through a preset beam, where the preset beam is used to carry the third signals to be sent to at least one terminal device corresponding to the beam.

With reference to the second aspect, in some possible implementations, the first matrix includes N pairwise orthogonal M-dimensional vectors.

With reference to the second aspect and the foregoing implementations, in some possible implementations, a value of K is equal to a value of M, and the K third signals are in a one-to-one correspondence with the M signal components.

With reference to the second aspect and the foregoing implementations, in some possible implementations, the first matrix is a unitary matrix.

With reference to the second aspect and the foregoing implementations, in some possible implementations, the first matrix is a matrix determined based on a discrete fourier transform, or a matrix determined based on a Kronecker product of m matrices $\begin{bmatrix} 1 & j \\ j & 1 \end{bmatrix}$.

With reference to the second aspect and the foregoing implementations, in some possible implementations, a quantity of preset beams corresponds to N terminal devices.

With reference to the second aspect and the foregoing implementations, in some possible implementations, a mathematical form of the first matrix is any one of the following:

$$\begin{bmatrix} 1 & -j & -j & -1 \\ -1 & j & -j & -1 \\ -1 & -j & j & -1 \\ 1 & j & j & -1 \end{bmatrix}, \begin{bmatrix} 1 & j & j & -1 \\ j & 1 & -1 & j \\ j & -1 & 1 & j \\ -1 & j & j & 1 \end{bmatrix}, \text{ or } \begin{bmatrix} 1 & 1 & 1 & 1 \\ 1 & j & -1 & -j \\ 1 & -1 & 1 & -1 \\ 1 & -j & -1 & j \end{bmatrix}.$$

According to a third aspect, a network device is provided, and the network device includes a transceiver, a processor, and a memory. The processor is configured to control the transceiver to transmit and receive a signal. The memory is configured to store a computer program. The processor is configured to invoke the computer program from the memory and run the computer program, to enable the network device to perform the method according to any one of the first aspect and the possible implementations of the first aspect.

According to a fourth aspect, a computer program product is provided. The computer program product includes computer program code. When the computer program code is run on a computer, the computer is enabled to perform the method according to the foregoing aspects.

According to a fifth aspect, a computer-readable medium is provided. The computer-readable medium stores program code. When the program code is run on a computer, the computer is enabled to perform the method according to the foregoing aspects.

According to a sixth aspect, a chip system is provided. The chip system includes a processor, configured to support a network device in implementing functions in the foregoing aspects, for example, generating, receiving, determining, sending, or processing data and/or information in the foregoing method. In a possible design, the chip system further includes a memory. The memory is configured to store a program instruction and data that are necessary for the network device. The chip system may include a chip, or may include a chip and another discrete component.

**BRIEF DESCRIPTION OF DRAWINGS**

FIG. 1 is a schematic diagram of a wireless communications system according to an embodiment of this application;
FIG. 2 is a schematic diagram of a multiple-antenna system according to an embodiment of this application;
FIG. 3 is a schematic flowchart of a signal processing method according to an embodiment of this application;
FIG. 4 is a schematic diagram of a signal processing method according to an embodiment of this application;
FIG. 5 is a schematic diagram of a multiple-beam weight network according to an embodiment of this application;
FIG. 6 is a schematic block diagram of a signal processing apparatus according to an embodiment of this application;
FIG. 7 is another schematic block diagram of a signal processing apparatus according to an embodiment of this application; and
FIG. 8 is a schematic structural diagram of a network device according to an embodiment of this application.

**DESCRIPTION OF EMBODIMENTS**

The following describes technical solutions of this application with reference to the accompanying drawings.
The technical solutions in embodiments of this application may be used in various communications systems, for example, a long term evolution (long term evolution, LTE) system, an LTE frequency division duplex (frequency division duplex, FDD) system, an LTE time division duplex (time division duplex, TDD) system, a 5th generation (5th generation, 5G) mobile communications system or a new radio (new radio, NR) communications system, and a future mobile communications system.

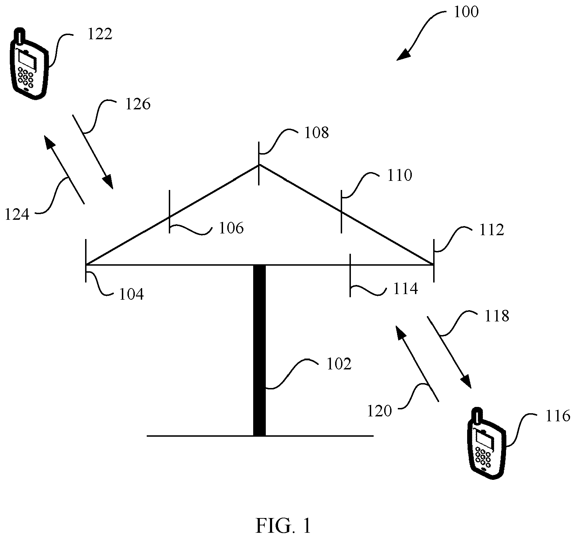

FIG. 1 is a schematic diagram of a communications system applicable to a communication method according to an embodiment of this application. As shown in FIG. 1, the communications system 100 includes a network device 102, and the network device 102 may include a plurality of antennas, for example, antennas 104, 106, 108, 110, 112, and 114. Optionally, the plurality of antennas included in the network device 102 may be divided into a plurality of antenna groups, and each antenna group may include one or more antennas. For example, one antenna group may include the antennas 104 and 106, another antenna group may include the antennas 108 and 110, and still another antenna group may include the antennas 112 and 114.

It should be understood that, only for ease of understanding, the foregoing and FIG. 1 show a case in which six antennas are divided into three antenna groups. This shall not constitute any limitation on this application. The network device 102 may include more or fewer antennas, the antennas included in the network device 102 may be divided into more or fewer antenna groups, and each antenna group may include more or fewer antennas.

In addition, the network device 102 may additionally include a transmitter chain and a receiver chain. A person of ordinary skill in the art may understand that both the transmitter chain and the receiver chain may include a plurality of components related to signal sending and receiving, for example, a processor, a modulator, a multiplexer, a demodulator, a demultiplexer, or an antenna.

It should be understood that the network device in the communications system may be any device that has a wireless transceiver function or a chip that can be disposed in the device. The device includes but is not limited to an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home NodeB (for example, Home evolved NodeB, or Home NodeB, HNB), a baseband unit (BaseBand Unit, BBU), an access point (Access Point, AP) in a wireless fidelity (Wireless Fidelity, Wi-Fi) system, a wireless relay node, a wireless backhaul node, a transmission point (transmission point, TP), a transmission reception point (transmission and reception point, TRP), or the like. Alternatively, the device may be a gNB in a 5G system, or may be a network node, such as a distributed unit (distributed unit, DU), that constitutes a gNB or a transmission point.

In some deployments, the gNB may include a centralized unit (centralized unit, CU) and a DU. The gNB may further include a radio frequency unit (radio unit, RU). The CU implements some functions of the gNB, and the DU implements some functions of the gNB. For example, the CU implements functions of a radio resource control

(radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer is eventually converted into information at the PHY layer, or is converted from information at the PHY layer. Therefore, in this architecture, higher layer signaling, such as RRC layer signaling or PDCPlayer signaling, may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network. This is not limited in this application.

The network device 102 may communicate with a plurality of terminal devices. Fox example, the network device 102 may communicate with a terminal device 116 and a terminal device 122. It may be understood that the network device 102 may communicate with any quantity of terminal devices similar to the terminal device 116 or 122.

The terminal device in the mobile communications system 100 may also be referred to as a terminal, user equipment (user equipment, UE), a mobile station (mobile station, MS), a mobile terminal (mobile terminal, MT), or the like. The terminal device in the embodiments of this application may be a mobile phone (mobile phone), a tablet (Pad), or a computer with a wireless transceiver function, or may be a wireless terminal used in scenarios such as a virtual reality (virtual reality, VR), an augmented reality (augmented reality, AR), industrial control (industrial control), self-driving (self driving), telemedicine (remote medical), a smart grid (smart grid), transportation safety (transportation safety), a smart city (smart city), a smart home (smart home), or the like. In this application, the terminal device and a chip that can be used in the terminal device are collectively referred to as a terminal device. It should be understood that a specific technology and a specific device form that are used by the terminal device are not limited in the embodiments of this application.

As shown in the FIG. 1, the terminal device 116 communicates with the antennas 112 and 114. The antennas 112 and 114 send a signal to the terminal device 116 over a forward link 118, and receive a signal from the terminal device 116 over a reverse link 120. In addition, the terminal device 122 communicates with the antennas 104 and 106. The antennas 104 and 106 send a signal to the terminal device 122 over a forward link 124, and receive a signal from the terminal device 122 over a reverse link 126.

For example, in a frequency division duplex FDD system, the forward link 118 may use a frequency band different from that used by the reverse link 120, and the forward link 124 may use a frequency band different from that used by the reverse link 126.

For another example, in a time division duplex TDD system and a full duplex (full duplex) system, the forward link 118 and the reverse link 120 may use a common frequency band, and the forward link 124 and the reverse link 126 may use a common frequency band.

Each antenna group and/or area designed for communication may be referred to as a sector of the network device 102. For example, an antenna group may be designed for communication with a terminal device in the sector within a coverage area of the network device 102. In a process in which the network device 102 communicates with the terminal devices 116 and 122 over the forward links 118 and 124 respectively, transmit antennas of the network device 102 may improve signal-to-noise ratios of the forward links 118 and 124 through beamforming. In addition, compared with a manner in which the network device sends, by using a single antenna, signals to all terminal devices served by the network device, when the network device 102 sends, through beamforming, signals to the terminal devices 116 and 122 that are randomly distributed within a related coverage area, less interference is caused to a mobile device in a neighboring cell.

In a given time, the network device 102, the terminal device 116, or the terminal device 122 may be a wireless communications sending apparatus and/or a wireless communications receiving apparatus. When sending data, the wireless communications sending apparatus may encode the data for transmission. Specifically, the wireless communications sending apparatus may obtain a specific quantity of data bits to be sent to the wireless communications receiving apparatus through a channel. For example, the wireless communications sending apparatus may generate, receive from another communications apparatus, or store in a memory, the specific quantity of data bits to be sent to the wireless communications receiving apparatus through the channel. The data bits may be included in a transport block or a plurality of transport blocks of the data, and the transport block may be segmented to generate a plurality of code blocks.

In addition, the communications system 100 may be a public land mobile network PLMN, a device-to-device (device to device, D2D) network, a machine-to-machine (machine to machine, M2M) network, or another network. FIG. 1 is merely a simplified schematic diagram of an example for ease of understanding. The network may further include another network device and more or fewer terminal devices not shown in FIG. 1.

In the communications system 100, the network device 102 may perform wireless communication with the terminal device 116 or 122 by using a MIMO technology. It should be understood that in the MIMO technology, both a transmit-end device and a receive-end device use a plurality of transmit antennas and receive antennas to transmit and receive signals through the plurality of antennas of the transmit-end device and the receive-end device. This improves communication quality. In the technology, space resources can be fully used, and multiple-input multiple-output is implemented by using the plurality of antennas, so that a system channel capacity can be increased by multiple times without increasing a spectrum resource and an antenna transmit power.

With development of a multiple-antenna technology, a plurality of transmit antennas and a plurality of receive antennas may be configured for both the network device and the terminal device. A quantity of transmit antennas configured for some terminal devices may be less than a quantity of receive antennas, for example, 1T2R (namely, one transmit antenna and two receive antennas). Alternatively, a quantity of transmit antennas configured for some terminal devices may be equal to a quantity of receive antennas, for example, 8T8R (namely, eight transmit antennas and eight receive antennas), or aTbR (a=b). It may be understood that in an example of 8T8R, the terminal device can simultaneously transmit an uplink signal/channel by using eight antennas, and can simultaneously receive a downlink signal/channel by using the eight antennas.

A multiple-beam antenna technology is used to increase a network capacity. To be specific, vertical (latitudinal) distribution of service information tunnels is expanded mainly by increasing a quantity of tunnels of a main device, so that spectral efficiency is improved, and the network capacity is improved. More than two single-antenna array elements are used to form an antenna array. After radio frequency processing is performed on a signal received by each array element, weighted processing is performed on the signal based on an appropriate weight conversion matrix, so that directional receiving can be achieved. One weight conversion matrix corresponds to a specific beam directivity pattern.

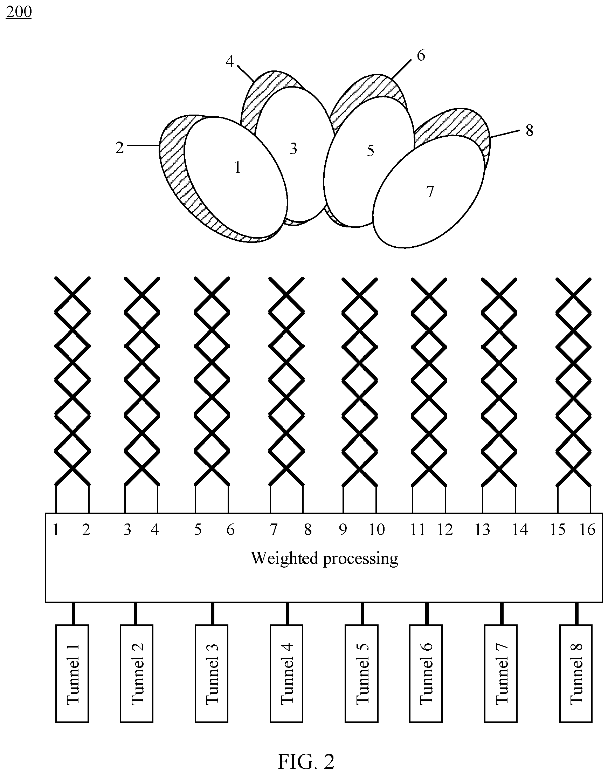

FIG. 2 is a schematic diagram of a multiple-antenna system. The multiple-antenna system including eight transmit/receive tunnels, such as a tunnel 1 to a tunnel 8 shown in FIG. 2, is used as an example. A baseband signal is processed and enters the eight transmit/receive tunnels, and then weighted processing is performed on the baseband signal. Specifically, the weighted processing may be performed based on a weight conversion matrix, for example, a split matrix (split matrix), to obtain 16 output signals. The 16 output signals are transmitted through an air interface. It should be understood that the weighted processing may change an original beam form, so that the signals on the transmit/receive tunnels are radiated to beams in different directions, to implement diversity, beamforming, spatial multiplexing, or the like. The weight conversion matrix may have different dimensions. For example, the split matrix may be an $8 \times 16$ determinant. In addition, a processing manner based on a $4 \times 8$ Butler matrix (butler) for eight input array elements may be used. This is not limited in this application.

Specifically, a process of the weighted processing may be represented by using the following mathematical expression.

$$\begin{bmatrix} Trx_1 \\ \vdots \\ Trx_m \end{bmatrix} = \begin{bmatrix} a_{11} & \cdots & a_{1n} \\ \vdots & \ddots & \vdots \\ a_{m1} & \cdots & a_{mn} \end{bmatrix} * \begin{bmatrix} p_1 \\ \vdots \\ p_n \end{bmatrix} \quad\cdots\cdots\cdots\cdots\cdots\cdots\cdots (1),$$

, where $\begin{bmatrix} p_1 \\ \vdots \\ p_n \end{bmatrix}$ represents a transmitted/received signal of each array element; $\begin{bmatrix} a_{11} & \cdots & a_{1n} \\ \vdots & \ddots & \vdots \\ a_{m1} & \cdots & a_{mn} \end{bmatrix}$ represents

a multiple-beam weight conversion matrix or weight network; $\begin{bmatrix} Trx_1 \\ \vdots \\ Trx_m \end{bmatrix}$ represents each actual transmit/receive tunnel, and each transmit/receive tunnel corresponds to each beam with independent coverage; m represents a quantity of tunnels; and n represents a quantity of arrays.

In a beamforming process, powers of a plurality of beams need to be controlled and scheduled based on a capability of a transmission system. In the multiple-antenna system described above, a power of each transmit/receive tunnel is limited. As a quantity of horizontal arrays increases, an antenna gain also increases continuously. An extremely high gain causes an extremely narrow beam, which is not conducive to three-sector coverage in a cellular network. In addition, as shown in FIG. 2, after the foregoing weighted processing, a signal on each tunnel is divided to 16 output arrays. For example, after the weighted processing is performed on a signal on a tunnel 1, a power is allocated to output ports 1 to 16, respectively $P_1$, $P_2$, ..., and $P_{16}$. $P_1$, $P_2$, ..., and $P_{16}$ correspond to a beam 1, a beam 2, ..., and a beam 8. However, in such a processing process, a power of a tunnel is transmitted through a beam that does not correspond to a receive-end device. For example, some powers of the tunnel 1 are transmitted to the receive-end device through the beams 7 and 8. However, the beam 7 and the beam 8 are invalid for the receive-end device. In other words, the receive-end device is not within coverage areas of the beam 7 and the beam 8. The receive-end device cannot receive a signal of the beam 7 or the beam 8. Consequently, the power of the tunnel is reduced.

In addition, in the multiple-antenna system, a maximum power of each tunnel is always fixed. When a rated power is limited, a plurality of powers can only be separately allocated to a plurality of beams with horizontal independent coverage. Consequently, flexible power allocation cannot be implemented on the plurality of independent beams. As a quantity of tunnels increases, each radio frequency tunnel corresponds to one antenna array. Consequently, power sharing is difficult to be implemented among beams in different groups. In the multiple-antenna system, although a beam can be fully beamformed through a plurality of tunnels, too many tunnels cause a cost increase.

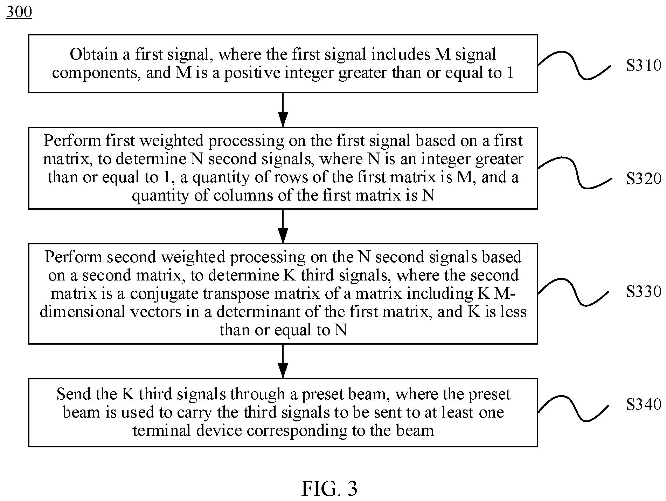

Therefore, this application provides a signal processing method for a multiple-beam antenna, to implement flexible power allocation on the plurality of independent beams by optimizing the process of the weighted processing. It should be understood that the technical solutions of this application may be applied to the network device 102 in the wireless communications system. Without loss of generality, the following uses a base station in a multiple-antenna system as an example to describe in detail the signal processing method for a multiple-beam antenna according to the embodiments of this application with reference to FIG. 3 to FIG. 6.

FIG. 3 is a schematic flowchart of a signal processing method for a multiple-beam antenna according to an embodiment of this application. As shown in FIG. 3, the method 300 includes the following content.

S310: Obtain a first signal, where the first signal includes M signal components, and M is a positive integer greater than or equal to 1.

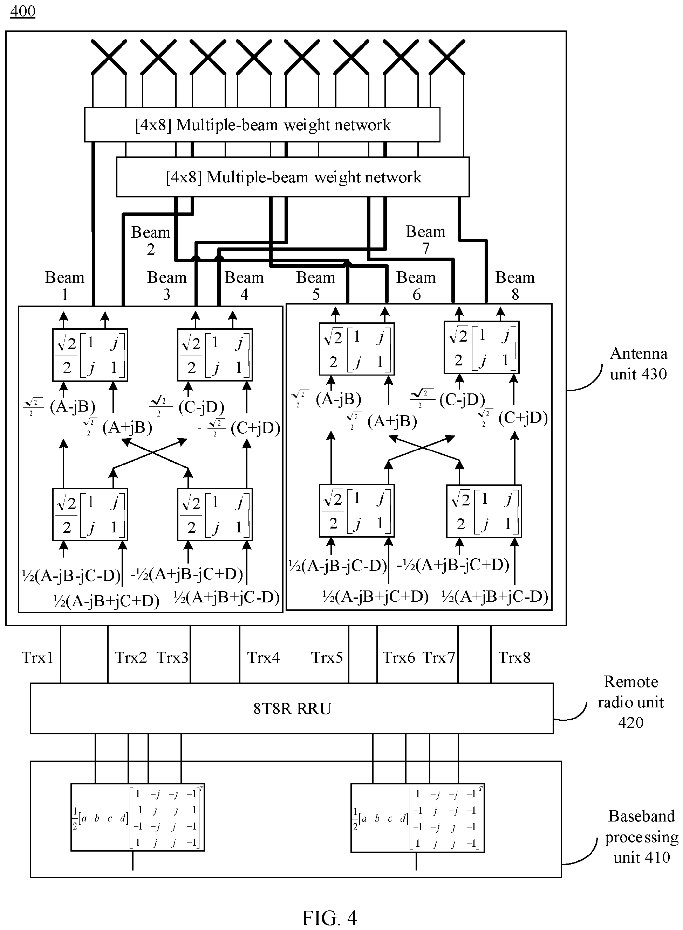

FIG. 4 is a schematic diagram of a signal processing method according to an embodiment of this application. It should be understood that the base station may implement functions such as accessing a terminal device to a wireless network, performing data transmission with the terminal device, and managing space radio resources. As shown in FIG. 4, a base station 400 may include one or more baseband processing units (baseband unit, BBU) 410, one or more RRUs 420, and an antenna unit 430. The BBU is a control center of the base station, and is mainly configured to perform baseband processing, for example, channel coding, multiplexing, modulating, and spectrum spreading, to control the base station. The RRU may also be referred to as a transceiver unit, a transceiver machine, a transceiver circuit, a transceiver, or the like, and may include a radio frequency unit. The RRU is mainly configured to: transmit and receive a radio frequency signal, and perform conversion between a radio frequency signal and a baseband signal. For example, the RRU is configured to send a signaling message to the terminal device and perform power allocation on the baseband signal. The antenna unit is mainly configured to perform weighted processing on a signal, and map the processed signal to different beams for sending. It should be understood that the RRU and the BBU may be physically disposed together, or may be physically disposed separately, for example, in a distributed base station. This is not limited in this application.

As shown in FIG. 4, eight transmit/receive tunnels Trx1 to Trx8 are used as an example. The BBU 410 may obtain a first signal. The first signal includes M signal components, and all the M signal components may be signals for one terminal device, or may be signals for a plurality of terminal devices. A left part of the BBU 410 in FIG. 4 is used as an example. The BBU 410 obtains the first signal, and the first signal includes four signal components: a, b, c, and d. It may be understood that the first signal is an original signal of the base station.

Optionally, the first signal may be a downlink signal sent by the base station to the terminal device, for example, a downlink reference signal such as a cell-specific reference signal (cell-specific reference signals, CRS), a demodulation reference signal (demodulation reference signal, DMRS), or a channel state information-reference signal (channel state information-reference signal, CSI-RS) in downlink. A form of the first signal is not limited in this application.

S320: Perform first weighted processing on the first signal based on a first matrix, to determine N second signals, where N is an integer greater than or equal to 1, a quantity of rows of the first matrix is M, and a quantity of columns of the first matrix is N.

Specifically, after obtaining the first signal, the BBU performs the first weighted processing on the first signal, where the first weighted processing is used to perform the power allocation by using the first matrix M×N, to allocate the first signal to N tunnels. In other words, the N second signals are components of the first signal on N transmit/receive tunnels.

Optionally, the first matrix includes N pairwise orthogonal M-dimensional vectors.

In a possible implementation, a value of K is equal to a value of M, and the K third signals are in a one-to-one correspondence with the M signal components. When K is equal to M, it may be understood that the BBU 410 may allocate one original signal to the N tunnels through the first weighted processing based on the first matrix.

For example, as shown in FIG. 4, four signals are obtained after the first signal is processed based on the first matrix. The four signals are processed by the RRU 420 and mapped to four transmit/receive tunnels: Trx1 to Trx4. In this way, a power of one signal is allocated to four transmit/receive tunnels. To be specific, the original signal of the base station is allocated to four feed tunnels, and then processes such as modulation, frequency mix, power allocation are performed, so that the original signal obtains powers on the 4 feed tunnels. The first weighted processing is then performed to adjust a digital domain power A. In this way, a power of the entire RRU can be flexibly allocated without being limited by a rated power of a single tunnel.

Optionally, the first matrix is a matrix determined based on a discrete fourier transform (discrete fourier transform, DFT), and a mathematical calculation formula may be represented as DFT (N). Alternatively, the first matrix is a matrix determined based on a Kronecker product of m matrices $\begin{bmatrix} 1 & j \\ j & 1 \end{bmatrix}$ or $\begin{bmatrix} 1 & -j \\ -j & 1 \end{bmatrix}$, and a calculation formula may be represented as Kron (...Kron (Kron ($\begin{bmatrix} 1 & j \\ j & 1 \end{bmatrix}$, $\begin{bmatrix} 1 & j \\ j & 1 \end{bmatrix}$), $\begin{bmatrix} 1 & j \\ j & 1 \end{bmatrix}$)...).

In a possible implementation, the first matrix is a unitary matrix.

Optionally, a mathematical form of the first matrix may be represented as:

$$\begin{bmatrix} 1 & -j & -j & -1 \\ -1 & j & -j & -1 \\ -1 & -j & j & -1 \\ 1 & j & j & -1 \end{bmatrix}, \begin{bmatrix} 1 & j & j & -1 \\ j & 1 & -1 & j \\ j & -1 & 1 & j \\ -1 & j & j & 1 \end{bmatrix} \text{ or } \begin{bmatrix} 1 & 1 & 1 & 1 \\ 1 & j & -1 & -j \\ 1 & -1 & 1 & -1 \\ 1 & -j & -1 & j \end{bmatrix}$$

, where j is a complex number.

S330: Perform second weighted processing on the N second signals based on a second matrix, to determine K third signals, where the second matrix is a conjugate transpose matrix of a matrix including K M-dimensional vectors in a determinant of the first matrix, and K is less than or equal to N.

Specifically, if the first matrix is $\begin{bmatrix} a_{11} & \cdots & a_{1n} \\ \vdots & \ddots & \vdots \\ a_{m1} & \cdots & a_{mn} \end{bmatrix}$, the first matrix includes n m-dimensional vectors,

such as $[a_{11}, a_{12}, a_{13} \cdots, a_{1n}]$ and $[a_{21}, a_{22}, a_{23} \cdots, a_{2n}]$. The second matrix may be the conjugate transpose matrix of the matrix including K m-dimensional vectors, for example, $\begin{bmatrix} a_{21}, a_{22}, a_{23} \cdots, a_{2n} \\ \vdots \\ a_{k1}, a_{k2}, a_{k3} \cdots, a_{kn} \end{bmatrix}^{T}$ and is used to perform the second weighted processing on the N second signals to obtain the K third signals.

Optionally, a value of K is equal to a value of M, and the K third signals are in a one-to-one correspondence with the M signal components. For example, when the first matrix is the unitary matrix, after the first weighted processing is performed on the signal based on $\begin{bmatrix} 1 & -j & -j & -1 \\ -1 & j & -j & -1 \\ -1 & -j & j & -1 \\ 1 & j & j & -1 \end{bmatrix}$, the second weighted processing is performed on the

signal based on $\begin{bmatrix} 1 & -j & -j & -1 \\ -1 & j & -j & -1 \\ -1 & -j & j & -1 \\ 1 & j & j & -1 \end{bmatrix}^{T}$. It can be learned that the first matrix mentioned above is a 4 × 4 matrix, and the second matrix is also a 4 × 4 matrix. In addition, the second matrix may be a conjugate transpose matrix of a matrix including all the N or fewer than N M-dimensional vectors in the determinant of the first matrix.

Two blocks in the antenna unit 430 in FIG. 4 each show a circuit form of the unitary matrix. In a possible implementation, the circuit may include four bridge devices, where a 90° bridge device

$$\frac{\sqrt{2}}{2}\begin{bmatrix} 1 & j \\ j & 1 \end{bmatrix}$$

is a smallest composition unit of the circuit. The 90° bridge device is also referred to as an intra-band combiner, which can continuously sample a transmit power along a determined direction of a transmission line, and divide one input signal into two signals with an equal amplitude and a 90° phase difference. In this way, the bridge circuit performs the second weighted processing, to converge the N second signals to the K third signals.

It should be understood that the unitary matrix circuit has a plurality of forms. For example, the unitary matrix may include one 90° bridge device, or may include a plurality of 90° bridge devices. This is not limited in this application.

S340: Send the K third signals through a preset beam, where the preset beam is used to carry the third signals to be sent to at least one terminal device corresponding to the beam.

Optionally, a quantity of preset beams corresponds to N terminal devices.

It should be understood that one terminal device may correspond to one or more beams. When one terminal device corresponds to one beam, the BBU performs the first weighted processing based on the first matrix, to allocate one original signal to the N tunnels, and then, the antenna unit may converge the signals on the N tunnels to the beam, and communication with the terminal device through the beam is performed.

In the foregoing processing in S310, S320, and S330, the first signal may be converged to K signals after the weighted processing, and the K signals are then mapped to the preset beam, where the preset beam is a beam that can be used by the terminal device to communicate with the base station. In this way, the N signals are converged to one antenna that intends to transmit the N signals.

It should be understood that the preset beam is a beam for communication between the terminal device and the base station. For example, the preset beam may be a beam preconfigured through higher layer signaling, or may be a beam determined by the terminal device or the base station after detection. A manner of determining the beam is not limited in this application.

It should be further understood that the preset beam may be one beam. For example, a first terminal device is within a coverage area of a beam 1, and the preset beam may be the beam 1. Alternatively, the preset beam is a group of beams, for example, a group of beams including a beam 1 and a beam 5, or a group of beams including a beam 1 to a beam 4. The quantity of the preset beams is not limited in this application.

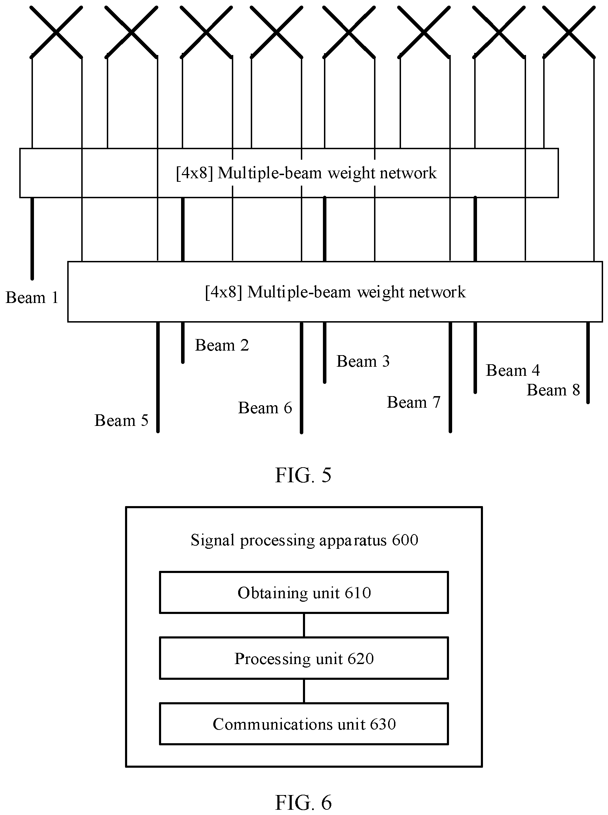

Optionally, the signals obtained after convergence may be processed by a multiple-beam weight network. As shown in FIG. 5, after being processed by the multiple-beam weight network, the signals are mapped to different groups of beams with independent coverage. Specifically, after the antenna unit 430 in FIG. 4 performs the second weighted processing on the signals, the N signals are converged to one antenna that intends to transmit the N signals. After the N signals are converged, the multiple-beam weight network may map the signals to different groups of beams with independent coverage. There are eight columns of ±45° polarized arrays in a directional antenna design, and corresponding transmit/receive processing tunnels are 16 TRxs. As shown in the figure, every eight co-polarized arrays correspond to one group of multiple-beam weight networks. That is, four TRX tunnels are mapped to the eight co-polarized arrays through the network.

It should be understood that, in the foregoing process in which the base station sends the signal to the terminal device, an execution sequence of the steps in the signal processing process is not limited in this application. For example, in a process in which the terminal device sends a signal to the base station, the signal processing method provided in this embodiment of this application is also applicable. The foregoing method may be reversely applied. In this way, a signal of the first terminal device is received through a preset beam. The signal received through the beam is then allocated to a plurality of feed tunnels through weighted processing based on the unitary matrix. Then, a plurality of signals are converged through inverse processing based on the conjugate transpose matrix of the unitary matrix in a baseband digital domain.

It should be further understood that a quantity of input signals is not limited in the signal processing method provided in this embodiment of this application. For example, as shown in FIG. 4, in the processing performed by the BBU 410 on one input signal, the weighted processing is performed to allocate the signal to the four feed tunnels. Alternatively, two signals may be simultaneously input, and the weighted processing is performed to allocate the two signals to a plurality of feed tunnels. Then, the antenna unit performs inverse processing of the weighted processing to converge the signals. The quantity of input signals and a quantity of feed tunnels to which the signals are allocated after the weighted processing are not limited in this application.

It should be further understood that, in the description process of the foregoing embodiment, that the BBU 410 performs the first weighted processing and the antenna unit 430 performs the second weighted processing is used as an example. For example, the first weighted processing may be processing based on the unitary matrix, and the second weighted processing may be processing based on the conjugate transpose matrix of the unitary matrix. This should not constitute a limitation on this application. The two processing manners are interchangeable. For example, the BBU 410 performs the first weighted processing based on the conjugate transpose matrix of the unitary matrix, and the antenna unit 430 performs the second weighted processing based on the unitary matrix. This is not limited in this application.

According to the signal processing method provided in this embodiment of this application, the baseband processing unit performs processing based on the unitary matrix, to allocate one signal to the plurality of feed tunnels, and then performs processes such as modulation and power allocation. Then, the antenna unit performs, through the bridge circuit, the processing based on an inverse transform relationship of the unitary matrix, to converge the signals on the plurality of feed tunnels to the preset antenna. In this way, the power can be allocated flexibly through the RRU. Compared with a fixed transmit/receive relationship in an existing antenna feeder technology that a feed tunnel of an RRU is directly connected to an antenna, this solution can implement power sharing among the feed tunnels of the RRU without adding a feed tunnel, and implement flexible power allocation among a plurality of antennas, so that costs can be reduced.

The foregoing describes in detail the signal processing method in the embodiments of this application with reference to FIG. 1 to FIG. 5. The following describes in detail a signal processing apparatus in the embodiments of this application with reference to FIG. 6 to FIG. 8.

FIG. 6 shows a signal processing apparatus 600 according to an embodiment of this application. The signal processing apparatus 600 includes:

an obtaining unit 610, configured to obtain a first signal, where the first signal includes M signal components, and M is a positive integer greater than or equal to 1;

a processing unit 620, configured to perform first weighted processing on the first signal based on a first matrix, to determine N second signals, where N is an integer greater than or equal to 1, a quantity of rows of the first matrix is M, and a quantity of columns of the first matrix is N, where

the processing unit 620 is further configured to perform second weighted processing on the N second signals based on a second matrix, to determine K third signals, where the second matrix is a conjugate transpose matrix of a matrix including K M-dimensional vectors in a determinant of the first matrix, and K is less than or equal to N; and

a communications unit 630, configured to send the K third signals through a preset beam, where the preset beam is used to carry the third signals to be sent to at least one terminal device corresponding to the beam.

Optionally, the first matrix includes N pairwise orthogonal M-dimensional vectors.

Optionally, a value of K is equal to a value of M, and the K third signals are in a one-to-one correspondence with the M signal components.

In a possible implementation, a quantity of preset beams corresponds to N terminal devices.

Optionally, the first matrix is a unitary matrix.

In a possible implementation, the first matrix is a matrix determined based on a discrete fourier transform, or a matrix determined based on a Kronecker product of m matrices $\begin{bmatrix} 1 & j \\ j & 1 \end{bmatrix}$ or $\begin{bmatrix} 1 & -j \\ -j & 1 \end{bmatrix}$.

Specifically, a mathematical form of the unitary matrix is any one of the following:

$$\begin{bmatrix} 1 & -j & -j & -1 \\ -1 & j & -j & -1 \\ -1 & -j & j & -1 \\ 1 & j & j & -1 \end{bmatrix}, \begin{bmatrix} 1 & j & j & -1 \\ j & 1 & -1 & j \\ j & -1 & 1 & j \\ -1 & j & j & 1 \end{bmatrix}, \text{or} \begin{bmatrix} 1 & 1 & 1 & 1 \\ 1 & j & -1 & -j \\ 1 & -1 & 1 & -1 \\ 1 & -j & -1 & j \end{bmatrix}.$$

In a possible design, the signal processing apparatus 600 may be a network device (for example, a base station) or a chip configured in a network device.

It should be understood that the signal processing apparatus 600 herein is presented in a form of functional units. The term "unit" herein may refer to an application-specific integrated circuit (application specific integrated circuit, ASIC), an electronic circuit, a processor (for example, a shared processor, a special-purpose processor, or a group processor) configured to execute one or more software or firmware programs, a memory, a merge logic circuit, and/or another suitable component that supports the described function. In an optional example, a person skilled in the art should understand that the signal processing apparatus 600 may be specifically the base station in the foregoing embodiments, and that the signal processing apparatus 600 may be configured to perform the corresponding procedures and/or steps in the foregoing method embodiment 300. To avoid repetition, details are not described herein again.

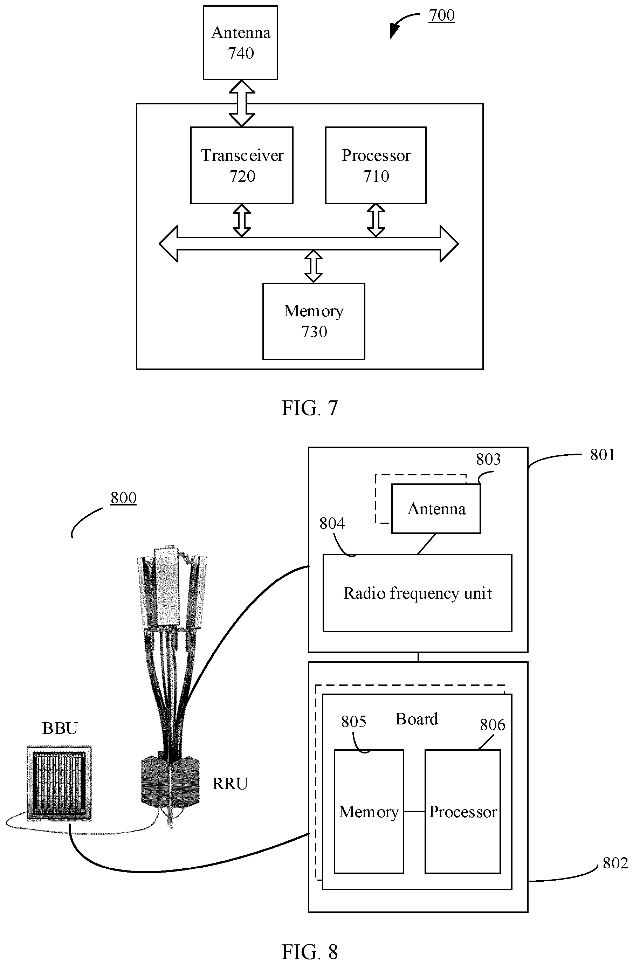

FIG. 7 is a schematic structural diagram of a network device 700 (for example, a base station) according to an embodiment of this application. As shown in FIG. 7, the network device 700 includes a processor 710 and a transceiver 720. Optionally, the network device 700 further includes a memory 730. The processor 710, the transceiver 720, and the memory 730 communicate with each other through an internal connection path, to transfer a control signal and/or a data signal. The memory 730 is configured to store a computer program. The processor 710 is configured to invoke the computer program from the memory 730 and run the computer program, to control the transceiver 720 to transmit and receive a signal.

The processor 710 and the memory 730 may be integrated into one processing apparatus. The processor 710 is configured to execute program code stored in the memory 730 to implement the foregoing function. During specific implementation, the memory 730 may also be integrated into the processor 710, or may be independent of the processor 710.

The network device may further include an antenna 740, configured to send, by using a radio signal, downlink data or downlink control signaling output by the transceiver 720.

Specifically, the network device 700 may correspond to the base station in the communication method 300 in the embodiments of this application, and the network device 700 may include modules configured to perform the method performed by the base station in the communication method 300 in FIG. 3. In addition, the modules in the network device 700 and the foregoing other operations and/or functions are used to implement the corresponding procedures in the communication method 300 in FIG. 3. Specifically, the memory 730 is configured to store the program code, to control the processor 710 to perform S320, and control the transceiver 720 to perform S330 in the method 300 by using the antenna 740. A specific process in which each module performs the foregoing corresponding step is described in detail in the method 300. For brevity, details are not described herein again.

FIG. 8 is a schematic structural diagram of a network device 800 according to an embodiment of this application. The network device 800 may be configured to implement the functions of the network device in the foregoing method 300. For example, FIG. 8 may be a schematic structural diagram of a base station. As shown in FIG. 8, the base station may be used in the system shown in FIG. 1. The base station 800 includes one or more radio frequency units, such as a remote radio unit (remote radio unit, RRU) 801 and one or more baseband units BBUs (which may also be referred to as a digital unit, digital unit, DU) 802. The RRU 801 may be referred to as a transceiver unit, a transceiver machine, a transceiver circuit, a transceiver, or the like, and may include at least one antenna 803 and a radio frequency unit 804. The RRU 801 is mainly configured to: transmit and receive a radio frequency signal, and perform conversion between a radio frequency signal and a baseband signal. For example, the RRU 801 is configured to send the signaling message in the foregoing embodiments to a terminal device. The BBU 802 is mainly configured to: perform baseband processing, control the base station, and the like. The BBU 802 is a control center of the base station. For example, the BBU 802 may be configured to control the base station 800 to perform an operation procedure related to the base station in the embodiment of the method 300.

In an example, the BBU 802 may include one or more boards, and a plurality of boards may jointly support a radio access network (such as an LTE system or an NR system) of a single access standard, or may separately support radio access networks of different access standards. The BBU 802 further includes a memory 805 and a processor 806. The memory 805 is configured to store a necessary instruction and necessary data. For example, the memory 805 stores a codebook and the like in the foregoing embodiments. The processor 806 is configured to control the base station to perform a necessary action, for example, configured to control the base station to perform an operation procedure related to the network device in the foregoing method embodiments. The memory 805 and the processor 806 may serve the one or more boards. In other words, a memory and a processor may be disposed on each board. Alternatively, a plurality of boards may share a same memory and a same processor. In addition, a necessary circuit may further be disposed on each board.

In a possible implementation, with development of a system-on-chip (system-on-chip, SOC) technology, all or some functions of the BBU 802 and the RRU 801 may be implemented through the SOC technology, for example, implemented through a base station function chip. The base station function chip integrates components such as a processor, a memory, and an antenna port. A program of a base station-related function is stored in the memory. The processor executes the program to implement the base station-related function. Optionally, the base station function chip can also read a memory outside the chip to implement the base station-related function.

It should be understood that the structure of the base station shown in FIG. 8 is merely a possible form, but should not constitute any limitation on this embodiment of this application. In this application, there may be a base station structure in another form in the future.

It should be understood that, the processor in the embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logical device, a discrete gate or transistor logical device, a discrete hardware component, or the like. The general-purpose processor may be a microprocessor, or the processor may be any conventional processor or the like.

It should be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memory, RAM) may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

According to the method provided in the embodiments of this application, this application further provides a computer program product. The computer program product includes computer program code. When the computer program code is run on a computer, the computer is enabled to perform the method in the embodiment shown in FIG. 3.

According to the method provided in the embodiments of this application, this application further provides a computer-readable medium. The computer-readable medium stores program code. When the program code is run on a computer, the computer is enabled to perform the method in the embodiment shown in FIG. 3.

According to the method provided in the embodiments of this application, this application further provides a system. The system includes the foregoing network device and one or more terminal devices. All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to the embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that in the embodiments of this application, terms such as "first", "second", "third" are merely used to differentiate between different objects, and shall not constitute any limitation on this application. For example, the terms are used to differentiate between different signals, different matrices, and different processing manners.

It should be further understood that in the embodiments of this application, "antenna" and "antenna port" are usually interchangeably used, but meanings of the terms can be understood by a person skilled in the art. It should be noted that meanings expressed by the terms are the same when a difference between the terms is not emphasized. An antenna port may be understood as a transmit antenna recognized by a receive-end device, or a transmit antenna that can be distinguished in space. One antenna port is configured for each virtual antenna, each virtual antenna may be a weighted combination of a plurality of physical antennas, and each antenna port may correspond to one reference signal port.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. Division into the units is merely logical function division and may be other division in an actual implementation. For example, a plurality of units or components may be combined. In addition, the displayed or discussed mutual couplings or communication connections may be indirect couplings or communication connections through some interfaces, apparatuses, or units.

In addition, functional units in the embodiments of this application may be integrated into one physical entity, or each of the units corresponds to one physical entity, or two or more units are integrated into one physical entity.

When the functions are implemented in a form of a software functional unit and sold or used as an independent product, the functions may be stored in a computer-readable storage medium. Based on such an understanding, the technical solutions of this application essentially, or a part contributing to the prior art, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in the embodiments of this application. The storage medium includes: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal processing method, applied to a network device comprising a plurality of feed tunnels, and comprising:

   obtaining a first signal, wherein the first signal comprises M signal components, and M is a positive integer greater than or equal to 1;

   performing first weighted processing on the first signal based on a first matrix, to determine N second signals, wherein N is an integer greater than or equal to 1, a quantity of rows of the first matrix is M, and a quantity of columns of the first matrix is N;

   performing second weighted processing on the N second signals based on a second matrix, to determine K third signals, wherein the second matrix is a conjugate transpose matrix of a matrix comprising K M-dimensional vectors in a determinant of the first matrix, and K is less than or equal to N; and

   sending the K third signals through a preset beam, wherein the preset beam is used to carry the third signals to be sent to at least one terminal device corresponding to the beam.

2. The method according to claim 1, wherein the first matrix comprises N pairwise orthogonal M-dimensional vectors.

3. The method according to claim 1 or 2, wherein a value of K is equal to a value of M, and the K third signals are in a one-to-one correspondence with the M signal components.

4. The method according to any one of claims 1 to 3, wherein the first matrix is an N-dimensional unitary matrix.

5. The method according to claim 4, wherein the first matrix is a matrix determined based on a discrete fourier transform; or

   the first matrix is a matrix determined based on a Kronecker product of m matrices $\begin{bmatrix} 1 & j \\ j & 1 \end{bmatrix}$ or $\begin{bmatrix} 1 & -j \\ -j & 1 \end{bmatrix}$.

6. The method according to any one of claims 1 to 5, wherein a quantity of preset beams corresponds to N terminal devices.

7. The method according to any one of claims 1 to 6, wherein a mathematical form of the first matrix is any one of the following:

$$\begin{bmatrix} 1 & -j & -j & -1 \\ -1 & j & -j & -1 \\ -1 & -j & j & -1 \\ 1 & j & j & -1 \end{bmatrix}, \begin{bmatrix} 1 & j & j & -1 \\ j & 1 & -1 & j \\ j & -1 & 1 & j \\ -1 & j & j & 1 \end{bmatrix}, \text{or} \begin{bmatrix} 1 & 1 & 1 & 1 \\ 1 & j & -1 & -j \\ 1 & -1 & 1 & -1 \\ 1 & -j & -1 & j \end{bmatrix}.$$

8. A signal processing apparatus, comprising:

   an obtaining unit, configured to obtain a first signal, wherein the first signal comprises M signal components, and M is a positive integer greater than or equal to 1;

   a processing unit, configured to perform first weighted processing on the first signal based on a first matrix, to determine N second signals, wherein N is an integer greater than or equal to 1, a quantity of rows of the first matrix is M, and a quantity of columns of the first matrix is N, wherein

   the processing unit is further configured to perform second weighted processing on the N second signals based on a second matrix, to determine K third signals, wherein the second matrix is a conjugate transpose matrix of a matrix comprising K M-dimensional vectors in a determinant of the first matrix, and K is less than or equal to N; and

   a communications unit, configured to send the K third signals through a preset beam, wherein the preset beam is used to carry the third signals to be sent to at least one terminal device corresponding to the beam.

9. The apparatus according to claim 8, wherein the first matrix comprises N pairwise orthogonal M-dimensional vectors.

10. The apparatus according to claim 8 or 9, wherein a value of K is equal to a value of M, and the K third signals are in a one-to-one correspondence with the M signal components.

11. The apparatus according to any one of claims 8 to 10, wherein the first matrix is an N-dimensional unitary matrix.

12. The apparatus according to claim 8 or 9, wherein the first matrix is a matrix determined based on a discrete fourier transform; or

    the first matrix is a matrix determined based on a Kronecker product of m matrices $\begin{bmatrix} 1 & j \\ j & 1 \end{bmatrix}$ or $\begin{bmatrix} 1 & -j \\ -j & 1 \end{bmatrix}$.

13. The apparatus according to any one of claims 8 to 12, wherein a quantity of preset beams corresponds to N terminal devices.

14. The apparatus according to any one of claims 8 to 13, wherein a mathematical form of the first matrix is any one of the following:

$$\begin{bmatrix} 1 & -j & -j & -1 \\ -1 & j & -j & -1 \\ -1 & -j & j & -1 \\ 1 & j & j & -1 \end{bmatrix}, \begin{bmatrix} 1 & j & j & -1 \\ j & 1 & -1 & j \\ j & -1 & 1 & j \\ -1 & j & j & 1 \end{bmatrix}, \text{or} \begin{bmatrix} 1 & 1 & 1 & 1 \\ 1 & j & -1 & -j \\ 1 & -1 & 1 & -1 \\ 1 & -j & -1 & j \end{bmatrix}.$$

15. A computer-readable storage medium, comprising a computer instruction, wherein when the computer instruction is run on a computer, the computer is enabled to perform the signal processing method according to any one of claims 1 to 7.

16. A computer program product, wherein when the computer program product runs on a computer, the computer is enabled to perform the signal processing method according to any one of claims 1 to 7.

FIG. 1

200

FIG. 2

300

| Obtain a first signal, where the first signal includes M signal components, and M is a positive integer greater than or equal to 1 | S310 |

| Perform first weighted processing on the first signal based on a first matrix, to determine N second signals, where N is an integer greater than or equal to 1, a quantity of rows of the first matrix is M, and a quantity of columns of the first matrix is N | S320 |

| Perform second weighted processing on the N second signals based on a second matrix, to determine K third signals, where the second matrix is a conjugate transpose matrix of a matrix including K M-dimensional vectors in a determinant of the first matrix, and K is less than or equal to N | S330 |

| Send the K third signals through a preset beam, where the preset beam is used to carry the third signals to be sent to at least one terminal device corresponding to the beam | S340 |

FIG. 3

400

[4x8] Multiple-beam weight network

[4x8] Multiple-beam weight network

Beam 2    Beam 7

Beam 1    Beam 3    Beam 4    Beam 5    Beam 6    Beam 8

$$\frac{\sqrt{2}}{2}\begin{bmatrix}1 & j \\ j & 1\end{bmatrix}$$

$$\frac{\sqrt{2}}{2}(A-jB)$$    $$-\frac{\sqrt{2}}{2}(A+jB)$$    $$\frac{\sqrt{2}}{2}(C-jD)$$    $$-\frac{\sqrt{2}}{2}(C+jD)$$

$$\frac{\sqrt{2}}{2}(A-jB)$$    $$-\frac{\sqrt{2}}{2}(A+jB)$$    $$\frac{\sqrt{2}}{2}(C-jD)$$    $$-\frac{\sqrt{2}}{2}(C+jD)$$

$$\frac{\sqrt{2}}{2}\begin{bmatrix}1 & j \\ j & 1\end{bmatrix}$$

Antenna unit 430

½(A-jB-jC-D)    -½(A+jB-jC+D)    ½(A-jB-jC-D)    -½(A+jB-jC+D)

½(A-jB+jC+D)    ½(A+jB+jC-D)    ½(A-jB+jC+D)    ½(A+jB+jC-D)

Trx1    Trx2  Trx3    Trx4    Trx5    Trx6  Trx7    Trx8

Remote radio unit 420

8T8R RRU

$$\frac{1}{2}[a \quad b \quad c \quad d]\begin{bmatrix}1 & -j & -j & -1 \\ -1 & j & -j & -1 \\ -1 & -j & j & -1 \\ 1 & j & j & -1\end{bmatrix}^T$$

$$\frac{1}{2}[a \quad b \quad c \quad d]\begin{bmatrix}1 & -j & -j & -1 \\ -1 & j & -j & -1 \\ -1 & -j & j & -1 \\ 1 & j & j & -1\end{bmatrix}^T$$

Baseband processing unit 410

FIG. 4

[4x8] Multiple-beam weight network

[4x8] Multiple-beam weight network

Beam 1

Beam 2

Beam 3

Beam 4

Beam 8

Beam 5

Beam 6

Beam 7

FIG. 5

Signal processing apparatus 600

Obtaining unit 610

Processing unit 620

Communications unit 630

FIG. 6

**FIG. 7**

**FIG. 8**

## INTERNATIONAL SEARCH REPORT

| | International application No. |
| --- | --- |
| | **PCT/CN2019/097682** |

**A. CLASSIFICATION OF SUBJECT MATTER**

H04B 7/0413(2017.01)i; H04B 7/06(2006.01)i

According to International Patent Classification (IPC) or to both national classification and IPC

**B. FIELDS SEARCHED**

Minimum documentation searched (classification system followed by classification symbols)

H04B;H04W;H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 加权, 权值, 权重, 矩阵, 向量, 共轭, 转置, 离散傅立叶变换, 酉矩阵, 酉阵, 行, 列, 部分, 射频通道, 射频链路, weight, matrix, vector, conjugat+, transpos+, discrete fourier transform, unitary matrix, column, row, part, radio frequency, channel, tunnel, link, radio unit, RF, DFT, IDFT, TXRU, TXU

**C. DOCUMENTS CONSIDERED TO BE RELEVANT**

| Category* | Citation of document, with indication, where appropriate, of the relevant passages | Relevant to claim No. |
| --- | --- | --- |
| X | ETRI. "Effect of Antenna Virtualization on CSI-RS Coverage in EBF/FD-MIMO," *R1-154395, 3GPP TSG RAN WG1 Meeting #82, URL:https://www.3gpp.org/ftp/tsg_ran/ WG1_RL1/TSGR1_82/Docs*, 15 August 2015 (2015-08-15), sections 1 and 2 | 1-16 |
| A | CN 106160805 A (FUJITSU LIMITED) 23 November 2016 (2016-11-23) entire document | 1-16 |
| A | CN 106888043 A (SHANGHAI RESEARCH CENTER FOR WIRELESS COMMUNICATIONS) 23 June 2017 (2017-06-23) entire document | 1-16 |
| A | CN 108023620 A (HANGZHOU DIANZI UNIVERSITY) 11 May 2018 (2018-05-11) entire document | 1-16 |
| A | WO 2015161446 A1 (HUAWEI TECHNOLOGIES CO., LTD.) 29 October 2015 (2015-10-29) entire document | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 October 2019** | **30 October 2019** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/097682**

| Patent document cited in search report | | | Publication date (day/month/year) | Patent family member(s) | | | Publication date (day/month/year) |
|---|---|---|---|---|---|---|---|
| CN | 106160805 | A | 23 November 2016 | None | | | |
| CN | 106888043 | A | 23 June 2017 | US | 2018191535 | A1 | 05 July 2018 |
| | | | | US | 10333748 | B2 | 25 June 2019 |
| | | | | EP | 3343795 | A1 | 04 July 2018 |
| CN | 108023620 | A | 11 May 2018 | None | | | |
| WO | 2015161446 | A1 | 29 October 2015 | JP | 2017517943 | A | 29 June 2017 |
| | | | | US | 9998188 | B2 | 12 June 2018 |
| | | | | US | 2017041054 | A1 | 09 February 2017 |
| | | | | CN | 105379141 | A | 02 March 2016 |
| | | | | CN | 105379141 | B | 26 April 2019 |
| | | | | JP | 6305562 | B2 | 04 April 2018 |

Form PCT/ISA/210 (patent family annex) (January 2015)

**EP 3 817 241 A1**

**REFERENCES CITED IN THE DESCRIPTION**

**Patent documents cited in the description**

- CN 201810846998